# EUROPEAN PATENT SPECIFICATION

(11) **EP 3 702 116 B1**
(45) Date of publication and mention of the grant of the patent: **12.01.2022**
(21) Application number: 20159684.8
(22) Date of filing: 27.02.2020
(51) Int. Cl.: B25J 19/00

(54) **ROBOT WAIST SKELETON AND ROBOT**
ROBOTERTAILLENSKELETT UND ROBOTER
SQUELETTE DE TAILLE DE ROBOT ET ROBOT

(30) Priority: 01.03.2019 CN 201910154368
(43) Date of publication of application: 02.09.2020
(73) Proprietor: Cloudminds (Beijing) Technologies Co., Ltd., Fangshan District, Beijing (CN); Cloudminds Robotics Co., Ltd., Shanghai 201100 (CN)
(72) Inventor: Cui, Haotian, Fangshan District, Beijing (CN); Yan, Xunge, Fangshan District, Beijing (CN); Huang, William Xiao-Qing, Fangshan District, Beijing (CN); Luo, Cheng, Fangshan District, Beijing (CN); Zhang, Yufeng, Fangshan District, Beijing (CN)
(74) Representative: Gulde & Partner

(56) References cited:
- CN-A- 106 272 459
- JP-B2- 3 726 023
- US-A1- 2002 045 401
- INNFOS TECHNOLOGY: "INNFOS XR-1 Robot - the intelligent service robot powered by INNFOS SCA", YouTube, 24 February 2019 (2019-02-24), pages 1-1, XP054980621, Retrieved from the Internet: URL:https://www.youtube.com/watch?v=a4i8P5 0lG9k [retrieved on 2020-06-24]

## Description

### TECHNICAL FIELD

Embodiments of the present application relate to the technical field of robots, and in particular, relate to a robot waist skeleton and a robot.

### BACKGROUND

The waist skeleton of a robot is a hinge structure bridging an upper body and a lower body of the robot, and is a key component ensuring high flexibility and high freedom of the robot.

During the implementation of the present application, the inventors have identified that: At present, a waist structure of a robot is generally defined by directly lapping a waist skeleton of the robot to a waist skin. In this method for defining the structure of the robot waist, when the appearance and shape of the robot waist need to be changed, the whole waist skeleton needs to be replaced, which is troublesome, and causes a high cost.

US 2002/045 401 A1 discloses a toy doll which can be moved and rotated like a human being. Once a pose is taken the pose is maintained. The toy doll comprises an upper body, an abdomen portion constructed of an upper abdomen and a lower abdomen and a lower body, wherein an interconnecting bar connects the body portions and the abdomen portions which rub against each other and are movable. They are also forced toward the center of the interconnecting bar.

JP 3726023 B2 discloses an articulation device and anthropomorphic body. The articulation device 1 comprises a first member 2, holding parts 10 and 11 rotatably holding the spherical articulation 6 of the first member 2, and a second member 3 having a flange 13 formed thereon. The anthropomorphic body 21 comprises the lower and upper half parts thereof 22 and 23 and a support bone member 40 for connecting the lower half part 22 to the upper half part 23. The support bone member 40 comprises the second members 3 arranged at both ends thereof, the second member at one end is installed on the lower half part 22, and the second member 3 at the other end is installed on the upper half part 23.

CN 106272459 A discloses a humanoid robot. The humanoid robot comprises a robot head, robot arms, a robot waist, robot legs and a robot cover, all of which are internally provided with movement driving mechanisms correspondingly. The robot cover covers a robot internal structure inside. Due to the arrangement of the robot head, the robot arms, the robot waist, the robot legs and the robot cover, the humanoid robot achieves rotation of eyeballs, opening and closing of the mouth, the nodding action and the turning action of the robot head, the swinging and rotating actions of the robot arms and the stooping action of the robot waist through driving of all the driving mechanisms. The figure of the robot can be more vivid through the robot cover, the humanoid robot has multiple movement freedom degrees and is compact in structure and vivid in figure, and the humanoid robot is used for the field of bionic robots.

A YouTube video: "INNFOS XR-1 Robot - the intelligent service robot powered by INNOFOS SCA" (https:/www.youtube.com/watch?v=a4i8P50IG9k) discloses an intelligent service robot with a waist inner skeleton and a waist outer skeleton.

### SUMMARY

In view of the defects in the related art, embodiments of the present application are mainly intended to provide a robot waist skeleton and a robot. The appearance and shape of a robot waist may be changed by only replacing a waist outer skeleton of the robot, with no need to wholly replace the waist skeleton, such that the cost is lowered.

To solve the above technical problem, the invention provides a robot waist skeleton. The robot waist skeleton includes a waist inner skeleton; and a waist outer skeleton which surrounds the waist inner skeleton, wherein the waist outer skeleton includes a waist outer skeleton lower part, a waist outer skeleton middle part, and a waist outer skeleton upper part; the waist outer skeleton lower part, the waist outer skeleton middle part, and the waist outer skeleton upper part being connected in sequence, and all surrounding the waist inner skeleton. The waist outer skeleton lower part includes a waist outer skeleton left lower part and a waist outer skeleton right lower part, wherein the waist outer skeleton left lower part and the waist outer skeleton right lower part are respectively fixed to two sides at a lower part of the waist inner skeleton. The waist outer skeleton middle part includes a waist outer skeleton middle front part and a waist outer skeleton middle rear part, wherein the waist outer skeleton middle front part is connected to the waist outer skeleton left lower part and the waist outer skeleton right lower part respectively, the waist outer skeleton middle rear part is connected to the waist outer skeleton left lower part and the waist outer skeleton right lower part respectively, the waist outer skeleton middle front part is connected to the waist outer skeleton middle rear part, and the waist outer skeleton middle front part and the waist outer skeleton middle rear part surround a middle part of the waist inner skeleton. The waist outer skeleton left lower part is provided with a first positioning pin, and the waist outer skeleton right lower part is provided with a second positioning pin; and the waist outer skeleton middle front part is provided with a first positioning hole and a second positioning hole, wherein the first positioning pin is inserted into the first positioning hole, and the second positioning pin is inserted into the second positioning hole.

Optionally, the waist outer skeleton left lower part is provided with a third positioning pin, and the waist outer skeleton right lower part is provided with a fourth positioning pin; and the waist outer skeleton middle rear part is provided with a third positioning hole and a fourth positioning hole, wherein the third positioning pin is inserted into the third positioning hole, and the fourth positioning pin is inserted into the fourth positioning hole.

Optionally, the waist outer skeleton upper part includes a waist outer skeleton upper front part and a waist outer skeleton upper rear part; and the waist outer skeleton upper front part is connected to the waist outer skeleton middle front part, the waist outer skeleton upper rear part is connected to the waist outer skeleton middle rear part, the waist outer skeleton upper front part is connected to the waist outer skeleton upper rear part, and the waist outer skeleton upper front part and the waist outer skeleton upper rear part surround an upper part of the waist inner skeleton.

Optionally, the waist outer skeleton middle front part is provided with a fifth positioning pin, and the waist outer skeleton upper front part is provided with a fifth positioning hole, wherein the fifth positioning pin is inserted into the fifth positioning hole.

Optionally, the waist outer skeleton middle rear part is provided with a sixth positioning pin, and the waist outer skeleton upper rear part is provided with a sixth positioning hole, wherein the sixth positioning pin is inserted into the sixth positioning hole.

Optionally, surfaces of the waist outer skeleton lower part, the waist outer skeleton middle part, and the waist outer skeleton upper part that are distal from the waist inner skeleton are each provided with a skin positioning groove.

Optionally, the waist outer skeleton is made of a lightweight material.

To solve the technical problem, embodiments of the present application further provides a robot. The robot includes the robot waist skeleton as described above.

The embodiments of the present invention achieve the following beneficial effects:
Different from the related art, in the embodiments of the present application, the robot waist skeleton is divided into the waist inner skeleton and the waist outer skeleton. The waist inner skeleton is configured to define each movement joint of the robot waist; and the waist outer skeleton is configured to define the appearance and shape of the robot waist, and wrap and protect the waist inner skeleton. When the appearance and shape of the robot waist need to be changed, the waist outer skeleton may be directly replaced, with no need to wholly replace the robot waist skeleton. In this way, the cost is lowered.

### BRIEF DESCRIPTION OF THE DRAWINGS

For clearer descriptions of the technical solutions according to the specific embodiments of the present application or the technical solutions in the related art, the accompanying drawings incorporated for illustrating the specific embodiments or the related art are briefly described hereinafter. In all the accompanying drawings, like elements or parts are generally denoted by like reference numerals. In the accompanying drawings, various elements or parts are not necessarily drawn according to the actual scale.
FIG. 1 is a schematic view of a robot waist skeleton according to an embodiment of the present application;
FIG. 2 is an exploded view of a waist outer skeleton in the robot waist skeleton according to an embodiment of the present application;
FIG. 3 is an exploded view of a waist outer skeleton lower part in the robot waist skeleton according to an embodiment of the present application;
FIG. 4 is a first exploded view of a waist outer skeleton middle part in the robot waist skeleton according to an embodiment of the present application;
FIG. 5 is a second exploded view of a waist outer skeleton middle part in the robot waist skeleton according to an embodiment of the present application;
FIG. 6 is a third exploded view of a waist outer skeleton middle part in the robot waist skeleton according to an embodiment of the present application;
FIG. 7 is an exploded view of a waist outer skeleton upper part in the robot waist skeleton according to an embodiment of the present application;
FIG. 8 is a front view of a robot waist skeleton according to an embodiment of the present application; and
FIG. 9 is a rear view of a robot waist skeleton according to an embodiment of the present application.

Reference numerals and denotations thereof:
Robot waist skeleton 20;
Waist outer skeleton 21;
Waist inner skeleton 22;
Waist outer skeleton lower part 211;
Waist outer skeleton middle part 212;
Waist outer skeleton upper part 213;
Waist outer skeleton left lower part 2111;
Waist outer skeleton right lower part 2112;
First positioning pin 2111a;
Third positioning pin 2111b;
Second positioning pin 2112a;
Fourth positioning pin 2112b;
Waist outer skeleton middle front part 2121;
Waist outer skeleton middle rear part 2122;
First positioning hole 2121a;
Second positioning hole 2121b;
Fifth positioning pin 2121c;
Third positioning hole 2122a;
Fourth positioning hole 2122b;
Sixth positioning pin 2122c;
Fifth positioning hole 2131a;
Waist outer skeleton upper front part 2131;
Waist outer skeleton upper rear part 2132;
Sixth positioning hole 2132a;
Skin positioning groove 214.

### DETAILED DESCRIPTION

The embodiments containing the technical solutions of the present application are described in detail with reference to the accompanying drawings. The embodiments hereinafter are only used to clearly describe the technical solutions of the present application. Therefore, these embodiments are only used as examples, but are not intended to limit the protection scope of the present application.

It should be noted that unless otherwise specified, the technical terms and scientific terms used in the present application shall express general meanings that may be understood by a person skilled in the art.

In the description of some embodiments of the present application, it should be understood that the terms "central", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present application.

In addition, terms of "first", "second" are only used for description, but shall not be understood as indication or implication of relative importance or implicit indication of the number of the specific technical features. In the description of the present application, the term "more" or "a plurality of' signifies at least two, unless otherwise specified.

In the description of the present application, it should be noted that unless otherwise specified and defined, the terms "mounted", "coupled", "connected" and "fixed" and derivative forms thereof shall be understood in a broad sense, which, for example, may be understood as fixed connection, detachable connection or integral connection; may be understood as mechanical connection or electrical connection, or understood as direct connection, indirect connection via an intermediate medium, or communication between the interiors of two elements or interactions between two elements. Persons of ordinary skill in the art may understand the specific meanings of the above terms in the present application according to the actual circumstances and contexts.

In the present application, unless otherwise specified or defined, by defining that a first feature is disposed "above" or "below" or "beneath" a second feature, it may be meant that the first feature is in direct contact with the second feature, or the first feature is in indirect contact with the second feature via an intermediate medium. In addition, by defining that a first feature is disposed "over" or "above" a second feature, it may be meant that the first feature is rightly over the second feature or is obliquely above the second feature, or the horizontal height of the first feature is greater than that of the second feature. In addition, by defining that a first feature is disposed "under" or "blow, or "beneath" a second feature, it may be meant that the first feature is rightly under the second feature or is obliquely below the second feature, or the horizontal height of the first feature is less than that of the second feature.

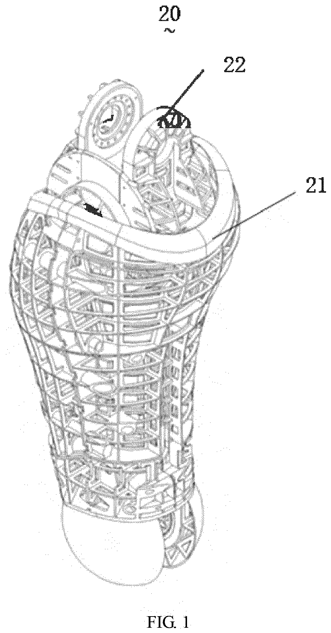

Referring to FIG. 1, a robot waist skeleton 20 includes a waist inner skeleton 22 and a waist outer skeleton 21. The waist outer skeleton 21 surrounds the waist inner skeleton 22, and is connected to the waist inner skeleton 22. The waist inner skeleton 22 is configured to define each movement joint of a robot waist, and the waist outer skeleton 21 is configured to define the appearance and shape of the robot waist.

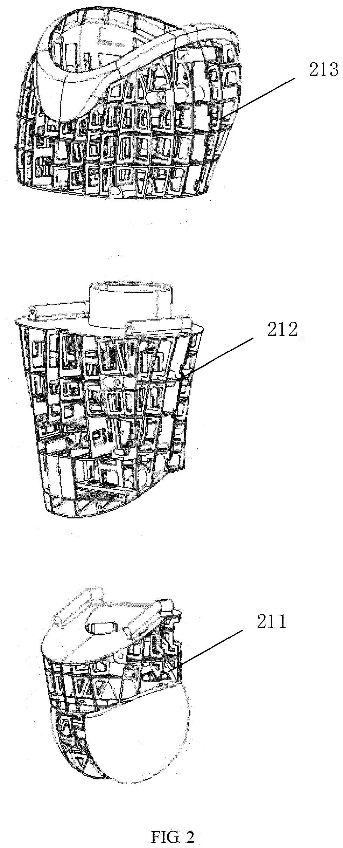

With respect to the waist outer skeleton 21, as illustrated in FIG. 2, the waist outer skeleton 21 includes a waist outer skeleton lower part 211, a waist outer skeleton middle part 212, and a waist outer skeleton upper part 213.

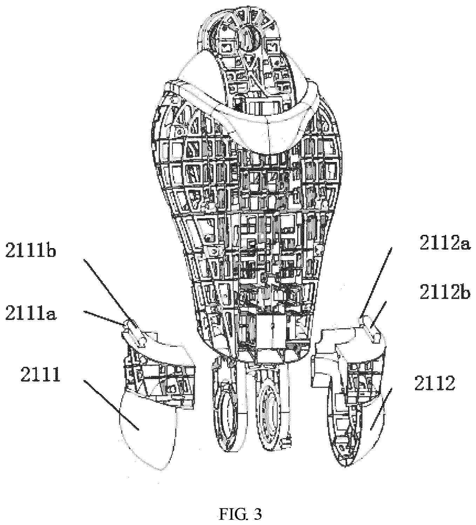

With respect to the waist outer skeleton lower part 211, as illustrated in FIG. 2 and FIG. 3, the waist outer skeleton lower part 211 includes a waist outer skeleton left lower part 2111 and a waist outer skeleton right lower part 2112. The waist outer skeleton left lower part 2111 is threaded to a lower part of the waist inner skeleton 22, and the waist outer skeleton right lower part 2112 is threaded to the waist outer skeleton left lower part 2111 and the lower part of the waist inner skeleton 22 respectively. The threaded fixing has the merits of reliable fixing and easy detachability, which is favorable to repair and part replacement. The waist outer skeleton right lower part 2112 is interconnected to the waist outer skeleton left lower part 2111, and both the waist outer skeleton right lower part 2112 and the waist outer skeleton left lower part 2111 surround the lower part of the waist inner skeleton 22, to wrap and protect the lower part of the waist inner skeleton 22, and define the appearance of the waist lower part of the robot. The waist outer skeleton left lower part 2111 is further provided with a first positioning pin 2111a and a third positioning pin 2111b. In addition, the waist outer skeleton right lower part 2112 includes a second positioning pin 2112a and a fourth positioning pin 2112b.

It should be noted that the waist outer skeleton left lower part 2111 is connected to the waist inner skeleton 22, and the waist outer skeleton right lower part 2112 is connected to the waist inner skeleton 22 in other modes, for example, welding connection, snap-fitting connection or the like, other than the connection modes as described above.

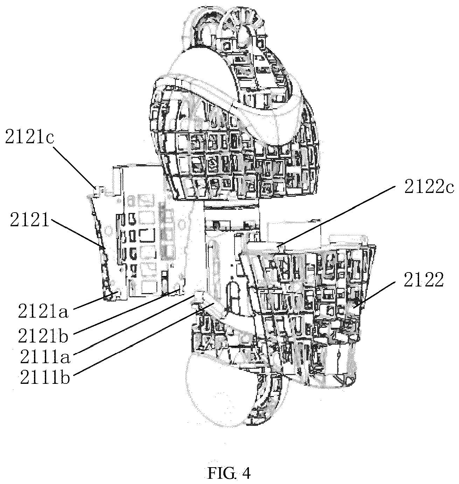

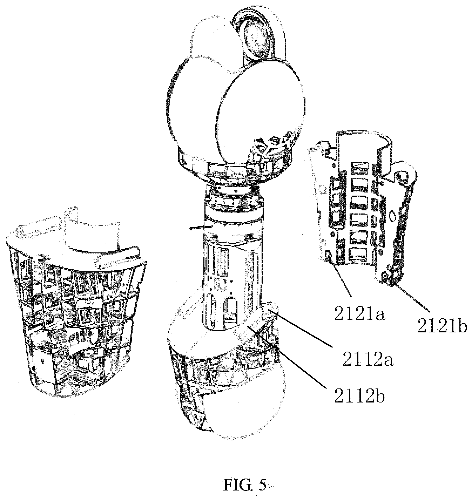

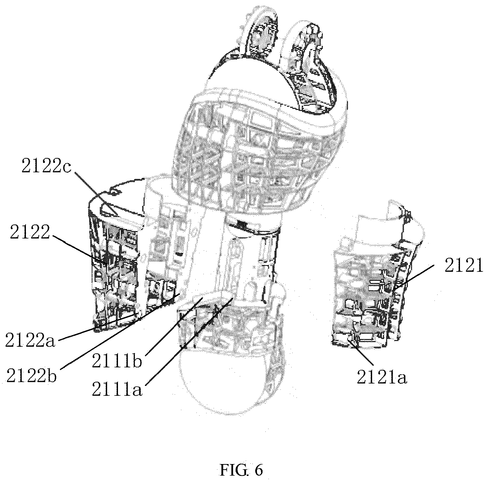

With respect to the waist outer skeleton middle part 212, as illustrated in FIG. 4 to FIG. 6, the waist outer skeleton middle part 212 includes a waist outer skeleton middle front part 2121 and a waist outer skeleton middle rear part 2122. The waist outer skeleton middle front part 2121 is provided with a first positioning hole 2121a, a second positioning hole 2121b, and a fifth positioning pin 2121c. The first positioning pin 2111a is inserted into the first positioning hole 2121a, and the second positioning pin 2112a is inserted into the second positioning hole 2121b, such that the waist outer skeleton middle front part 2121 is connected to the waist outer skeleton left lower part 2111 and the waist outer skeleton right lower part 2112 respectively. The waist outer skeleton middle rear part 2122 is provided with a third positioning hole 2122a, a fourth positioning hole 2122b, and a sixth positioning pin 2122c. The third positioning pin 2111b is inserted into the third positioning hole 2122a, and the fourth positioning pin 2112b is inserted into the fourth positioning hole 2122b, such that the waist outer skeleton middle rear part 2122 is connected to the waist outer skeleton left lower part 2111 and the waist outer skeleton right lower part 2112 respectively. In addition, the waist outer skeleton middle front part 2121 is further interconnected to the waist outer skeleton middle rear part 2122, and the waist outer skeleton middle front part 2121 and the waist outer skeleton middle rear part 2122 surround a middle part of the waist inner skeleton 22, such that the middle part of the waist inner skeleton 22 is wrapped and protected, and the shape of the waist middle part of the robot is defined. In some embodiments, the waist outer skeleton middle rear part 2122 may be further threadedly fixed to the waist outer skeleton middle front part 2121.

It may be understood that the waist outer skeleton middle rear part 2122 may be connected to the waist outer skeleton middle front part 2121, the waist outer skeleton middle front part 2121 may be connected to the waist outer skeleton left lower part 2111 and the waist outer skeleton right lower part 2112 respectively, and the waist outer skeleton middle rear part 2122 may be connected to the waist outer skeleton left lower part 2111 and the waist outer skeleton right lower part 2112 respectively in other modes other that the connection mode as described above, which are not described herein any further.

In some embodiments, the first positioning pin 2111a and the third positioning pin 2111b are connected to each other, and define an included angle less than or greater than 180 degrees; and the second positioning pin 2112a and the fourth positioning pin 2112b are connected to each other, and define an included angle less than or greater than 180 degrees. When the first positioning pin 2111a is inserted into the first positioning hole 2121a, the first positioning hole 2121a may not slide to the third positioning pin 2111b, and the third positioning pin 2111b may position the first positioning hole 2121a. Similarly, the first positioning pin 2111a may position the third positioning hole 2122a, the second positioning pin 2112a may position the fourth positioning hole 2122b, and the fourth positioning pin 2112b may position the second positioning hole 2121b.

It may be understood that the arrangements of first positioning pin 2111a, the third positioning pin 2111b, the second positioning pin 2112a, and the fourth positioning pin 2112b are not limited to the description as mentioned above, which are not described herein any further.

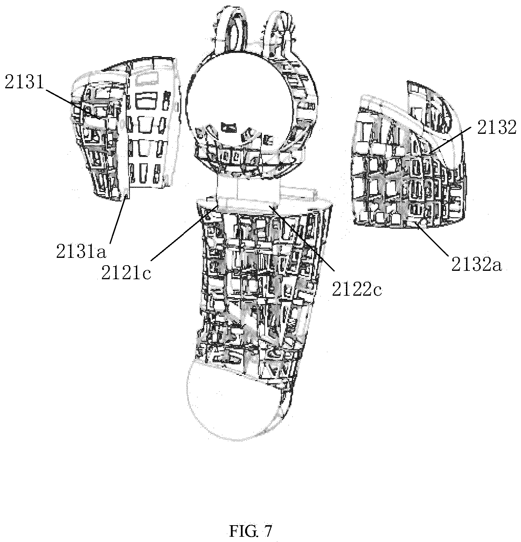

With respect to the waist outer skeleton upper part 213, as illustrated in FIG. 7, the waist outer skeleton upper part 213 includes a waist outer skeleton upper front part 2131 and a waist outer skeleton upper rear part 2132. The waist outer skeleton upper front part 2131 is provided with a fifth positioning hole 2131a, and the fifth positioning pin 2121c is inserted into the fifth positioning hole 2131a, such that the waist outer skeleton upper front part 2131 is connected to the waist outer skeleton middle front part 2121. The waist outer skeleton upper rear part 2132 is provided with a sixth positioning hole 2132a, and the sixth positioning pin 2122c is inserted into the sixth positioning hole 2132a, such that the waist outer skeleton upper rear part 2132 is connected to the waist outer skeleton middle rear part 2122. The waist outer skeleton upper front part 2131 is interconnected to the waist outer skeleton upper rear part 2132, and the waist outer skeleton upper front part 2131 and the waist outer skeleton upper rear part 2132 surround an upper part of the waist inner skeleton 22, to wrap and protect the upper part of the waist inner skeleton 22, and define the appearance and shape of the upper waist part of the robot. In some embodiments, the waist outer skeleton upper rear part 2132 may be further threadedly fixed to the waist outer skeleton upper front part 2131.

In some embodiments, two fifth positioning holes 2131a and two fifth positioning pins 2121c may be provided, wherein the two fifth positioning holes 2131a are respectively disposed on two ends of a surface of the waist outer skeleton upper front part 2131 facing towards the waist outer skeleton middle front part 2121, and two fifth positioning pins 2121c are disposed on two ends of a surface of the waist outer skeleton middle front part 2121 facing towards the waist outer skeleton upper front part 2131. When the waist outer skeleton upper front part 2131 is assembled to the waist outer skeleton middle front part 2121, the two fifth positioning pins 2121c are simultaneously inserted into the two fifth positioning holes 2131a, such that the connection between the waist outer skeleton upper front part 2131 and the waist outer skeleton middle front part 2121 is more reliable. Similarly, two sixth positioning holes 2132a and two sixth positioning pins 2122c may be provided, and one sixth positioning hole 2132a is inserted into one sixth positioning pin 2122.

Nevertheless, in some other embodiments, the fifth positioning hole 2131a, the fifth positioning pin 2121c, the sixth positioning hole 2132a, and sixth positioning pin 2122c may be provided in other quantities, which are not described herein any further.

It should be noted that the waist outer skeleton upper front part 2131 may be connected to the waist outer skeleton middle front part 2121, the waist outer skeleton upper rear part 2132 may bes connected to the waist outer skeleton upper front part 2131, and the waist outer skeleton upper rear part 2132 may be connected to the sixth positioning pin 2122 in other modes other than the connection modes as described above, which are not described herein any further.

The waist outer skeleton 21 is divided into the waist outer skeleton lower part 211, the waist outer skeleton middle part 212, and the waist outer skeleton upper part 213; wherein the waist outer skeleton lower part 211 includes the waist outer skeleton left lower part 2111 and the waist outer skeleton right lower part 2112; the waist outer skeleton middle part 212 includes the waist outer skeleton middle front part 2121 and the waist outer skeleton middle rear part 2122; and the waist outer skeleton upper part 213 includes the waist outer skeleton upper front part 2131 and the waist outer skeleton upper rear part 2132, such that the modularized design of the waist outer skeleton 21 is implemented. All the modules of the waist outer skeleton 21 are connected by insertion or threading, which is favorable to assembling, repair, and part replacement of the waist outer skeleton 21. According to the embodiments of the present application, if the waist outer skeleton 21 partially fails, only the failed component of the waist outer skeleton 21 needs to be replaced, with no need to replace the whole waist outer skeleton 21, and thus the cost is reduced. Nevertheless, with respect to different types of waist inner skeletons 22, sizes or structures thereof are different. Correspondingly, the waist outer skeleton 21 may also have different modularized division designs, which are not described herein any further.

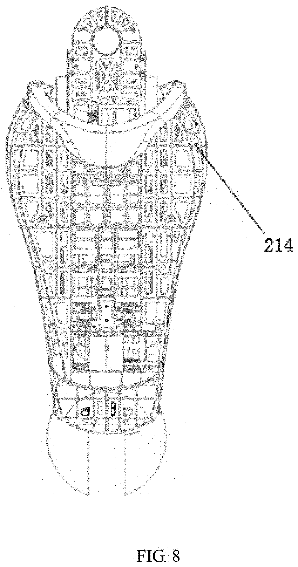

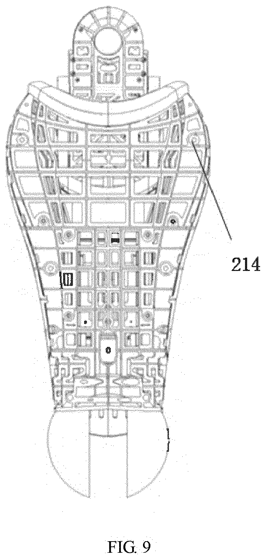

In some embodiments, as illustrated in FIG. 8 and FIG. 9, surfaces of the waist outer skeleton lower part 211, the waist outer skeleton middle part 212, and the waist outer skeleton upper part 213 that are distal from the waist inner skeleton 22 are each provided with a skin positioning groove 214. The skin positioning groove 214 is configured to connect an outer skin of the robot waist. In this way, the whole waist outer skeleton 21 is covered, and the appearance of the robot waist is defined.

In some other embodiments, the waist outer skeleton 21 is made of a lightweight plastic material, and may be manufactured by an injection-molding process. This process features lower cost and fewer restrictions on the appearance and shape, and thus diversified appearances of the robots may be achieved; such that the overall weight of the robot waist may be lowered, and the robot is light-weighted.

For better understanding of the inventive concepts of the present application, description of the assembling process of the waist skeleton is given herein as follows:

The waist outer skeleton left lower part 2111 and the waist outer skeleton right lower part 2112 are threaded to the lower part of the waist inner skeleton 22. In this situation, one surface of the waist outer skeleton left lower part 2111 abuts against one surface of the waist outer skeleton right lower part 2112, and then the two surfaces are threaded. In the meantime, the first positioning pin 2111a is inserted into the first positioning hole 2121a, and the second positioning pin 2112a is inserted into the second positioning hole 2121b. In the meantime, the third positioning pin 2111b is inserted into the third positioning hole 2122a, and the fourth positioning pin 2112b is inserted into the fourth positioning hole 2122b.In this situation, one surface of the waist outer skeleton middle front part 2121 abuts against one surface of the waist outer skeleton middle rear part 2122, and then the two surfaces are threaded. The fifth positioning pin 2121c is inserted into the fifth positioning hole 2131a. The sixth positioning pin 2122c is inserted into the sixth positioning hole 2132a. In this situation, one surface of the waist outer skeleton upper front part 2131 abuts against one surface of the waist outer skeleton upper rear part 2132, and then the two surfaces are threaded.

It may be understood that the waist skeleton may be assembled in other modes other than the mode as described above, which are not described herein any further.

In the embodiment of the present application, the robot waist skeleton 20 is divided into the waist inner skeleton 22 and the waist outer skeleton 21. The waist inner skeleton 22 is configured to define each movement joint of the robot waist, and the waist outer skeleton 21 is configured to define the appearance and shape of the robot waist, and wrap and protect the waist inner skeleton 22. When the appearance and shape of the robot waist needs to be changed, the waist outer skeleton may be directly replaced, with no need to wholly replace the robot waist skeleton. In this way, the cost is lowered. In addition, the waist outer skeleton 21 is made of a lightweight plastic material, which may lower the cost, reduce an overall weight of the robot waist, and make the robot lighter.

An embodiment of the present application further provides a robot. The robot includes a robot waist skeleton. The structure and functionality of the robot waist skeleton are the same as those of the robot waist skeleton as described in the above embodiments. For details of the structure and functionality, reference may be made to the above embodiments, which are not described herein any further.

It should be finally noted that the above-described embodiments are merely for illustration of the present application but are not intended to limit the present application. Although the present application is described in detail with reference to these embodiments, a person skilled in the art may also make various modifications to the technical solutions disclosed in the embodiments without departing from the scope defined by the claims. The present application is not limited to the specific embodiments described herein in this specification, but also includes all the technical solutions falling within the scope subject to the appended claims.

## Claims

1. A robot waist skeleton (20), comprising:
a waist inner skeleton (22); and
a waist outer skeleton (21), wherein
the waist outer skeleton (21) comprises a waist outer skeleton lower part (211), a waist outer skeleton middle part (212), and a waist outer skeleton upper part (213); the waist outer skeleton lower part (211), the waist outer skeleton middle part (212), and the waist outer skeleton upper part (213) being connected in sequence, and all surrounding the waist inner skeleton (22);
**characterized in that**
the waist outer skeleton lower part (211) comprises a waist outer skeleton left lower part (2111) and a waist outer skeleton right lower part (2112);
wherein
the waist outer skeleton left lower part (2111) and the waist outer skeleton right lower part (2112) are respectively fixed to two sides at a lower part of the waist inner skeleton (22);
the waist outer skeleton middle part (212) comprises a waist outer skeleton middle front part (2121) and a waist outer skeleton middle rear part (2122);
wherein
the waist outer skeleton middle front part (2121) is connected to the waist outer skeleton left lower part (2111) and the waist outer skeleton right lower part (2112) respectively, the waist outer skeleton middle rear part (2122) is connected to the waist outer skeleton left lower part (2111) and the waist outer skeleton right lower part (2112) respectively, the waist outer skeleton middle front part (2121) is connected to the waist outer skeleton middle rear part (2122), and the waist outer skeleton middle front part (2121) and the waist outer skeleton middle rear part (2122) surround a middle part of the waist inner skeleton (22);
the waist outer skeleton left lower part (2111) is provided with a first positioning pin (2111a), and the waist outer skeleton right lower part (2112) is provided with a second positioning pin (2112a); and
the waist outer skeleton middle front part (2121) is provided with a first positioning hole (2121a) and a second positioning hole (2121b), the first positioning pin (2111a) being inserted into the first positioning hole (2121a), and the second positioning pin (2112a) being inserted into the second positioning hole (2121b).

2. The robot waist skeleton (20) according to claim 1, wherein
the waist outer skeleton left lower part (2111) is provided with a third positioning pin (2111b), and the waist outer skeleton right lower part (2112) is provided with a fourth positioning pin (2112b); and
the waist outer skeleton middle rear part (2122) is provided with a third positioning hole (2122a) and a fourth positioning hole (2122b), the third positioning pin (2111b) being inserted into the third positioning hole (2122a), and the fourth positioning pin (2112b) being inserted into the fourth positioning hole (2122b).

3. The robot waist skeleton (20) according to claim 1, wherein
the waist outer skeleton upper part (213) comprises a waist outer skeleton upper front part (2131) and a waist outer skeleton upper rear part (2132); and
the waist outer skeleton upper front part (2131) is connected to the waist outer skeleton middle front part (2121), the waist outer skeleton upper rear part (2132) is connected to the waist outer skeleton middle rear part (2122), the waist outer skeleton upper front part (2131) is connected to the waist outer skeleton upper rear part (2132), and the waist outer skeleton upper front part (2131) and the waist outer skeleton upper rear part (2132) surround an upper part of the waist inner skeleton (22).

4. The robot waist skeleton (20) according to claim 3, wherein
the waist outer skeleton middle front part (2121) is provided with a fifth positioning pin (2121c), and the waist outer skeleton upper front part (2131) is provided with a fifth positioning hole (2131a), the fifth positioning pin (2121c) being inserted into the fifth positioning hole (2131a).

5. The robot waist skeleton (20) according to claim 3, wherein
the waist outer skeleton middle rear part (2122) is provided with a sixth positioning pin (2122c), and the waist outer skeleton upper rear part (2132) is provided with a sixth positioning hole (2132a), the sixth positioning pin (2122c) being inserted into the sixth positioning hole (2132a).

6. The robot waist skeleton (20) according to claim 1, wherein surfaces of the waist outer skeleton lower part (211), the waist outer skeleton middle part (212), and the waist outer skeleton upper part (213) that are distal from the waist inner skeleton (22) are each provided with a skin positioning groove (214).

7. The robot waist skeleton (20) according to any one of claims 1 to 6, wherein the waist outer skeleton (21) is made of a lightweight material.

8. A robot, comprising the robot waist skeleton (20) as defined in any one of claims 1 to 7.

## Patentansprüche

1. Robotertaillenskelett (20), umfassend:
ein inneres Taillenskelett (22); und
ein äußeres Taillenskelett (21), wobei
das äußere Taillenskelett (21) einen unteren Teil (211) des äußeren Taillenskeletts, einen mittleren Teil (212) des äußeren Taillenskeletts und einen oberen Teil (213) des äußeren Taillenskeletts umfasst; wobei der untere Teil (211) des äußeren Taillenskeletts, der mittlere Teil (212) des äußeren Taillenskeletts und der obere Teil (213) des äußeren Taillenskeletts aufeinander folgend verbunden sind und alle das innere Taillenskelett (22) umgeben;
**dadurch gekennzeichnet, dass**
der untere Teil (211) des äußeren Taillenskeletts einen linken unteren Teil (2111) des äußeren Taillenskeletts und einen rechten unteren Teil (2112) des äußeren Taillenskeletts umfasst;
wobei
der linke untere Teil (2111) des äußeren Taillenskeletts und der rechte untere Teil (2112) des äußeren Taillenskeletts entsprechend an zwei Seiten an einem unteren Teil des inneren Taillenskeletts (22) befestigt sind;
der mittlere Teil (212) des äußeren Taillenskeletts einen vorderen mittleren Teil (2121) des äußeren Taillenskeletts und einen hinteren mittleren Teil (2122) des äußeren Taillenskeletts umfasst;
wobei
der vordere mittlere Teil (2121) des äußeren Taillenskeletts mit dem linken unteren Teil (2111) des äußeren Taillenskeletts und dem rechten unteren Teil (2112) des äußeren Taillenskeletts verbunden ist, der hintere mittlere Teil (2122) des äußeren Taillenskeletts mit dem linken unteren Teil (2111) des äußeren Taillenskeletts und dem rechten unteren Teil (2112) des äußeren Taillenskeletts verbunden ist, der vordere mittlere Teil (2121) des äußeren Taillenskeletts mit dem hinteren mittleren Teil (2122) des äußeren Taillenskeletts verbunden ist und der vordere mittlere Teil (2121) des äußeren Taillenskeletts und der hintere mittlere Teil (2122) des äußeren Taillenskeletts einen mittleren Teil des inneren Taillenskeletts (22) umgeben;
der linke untere Teil (2111) des äußeren Taillenskeletts mit einem ersten Positionierungsstift (2111a) versehen ist und der rechte untere Teil (2112) des äußeren Taillenskeletts mit einem zweiten Positionierungsstift (2112a) versehen ist; und
der vordere mittlere Teil (2121) des äußeren Taillenskeletts mit einem ersten Positionierungsloch (2121a) und einem zweiten Positionierungsloch (2121b) versehen ist, wobei der erste Positionierungsstift (2111a) in das erste Positionierungsloch (2121a) eingeführt ist und der zweite Positionierungsstift (2112a) in das zweite Positionierungsloch (2121b) eingeführt ist.

2. Robotertaillenskelett (20) nach Anspruch 1, wobei
der linke untere Teil (2111) des äußeren Taillenskeletts mit einem dritten Positionierungsstift (2111b) versehen ist und der rechte untere Teil (2112) des äußeren Taillenskeletts mit einem vierten Positionierungsstift (2112b) versehen ist; und
der hintere mittlere Teil (2122) des äußeren Taillenskeletts mit einem dritten Positionierungsloch (2122a) und einem vierten Positionierungsloch (2122b) versehen ist, wobei der dritte Positionierungsstift (2111b) in das dritte Positionierungsloch (2122a) eingeführt ist und der vierte Positionierungsstift (2112b) in das vierte Positionierungsloch (2122b) eingeführt ist.

3. Robotertaillenskelett (20) nach Anspruch 1, wobei
der obere Teil (213) des äußeren Taillenskeletts einen vorderen oberen Teil (2131) des äußeren Taillenskeletts und einen hinteren oberen Teil (2132) des äußeren Taillenskeletts umfasst; und
der vordere obere Teil (2131) des äußeren Taillenskeletts mit dem vorderen mittleren Teil (2121) des äußeren Taillenskeletts verbunden ist, der hintere obere Teil (2132) des äußeren Taillenskeletts mit dem hinteren mittleren Teil (2122) des äußeren Taillenskeletts verbunden ist, der vordere obere Teil (2131) des äußeren Taillenskeletts mit dem hinteren oberen Teil (2132) des äußeren Taillenskeletts verbunden ist und der vordere obere Teil (2131) des äußeren Taillenskeletts und der hintere obere Teil (2132) des äußeren Taillenskeletts einen oberen Teil des inneren Taillenskeletts (22) umgeben.

4. Robotertaillenskelett (20) nach Anspruch 3, wobei
der vordere mittlere Teil (2121) des äußeren Taillenskeletts mit einem fünften Positionierungsstift (2121c) versehen ist und der vordere obere Teil (2131) des äußeren Taillenskeletts mit einem fünften Positionierungsloch (2131a) versehen ist, wobei der fünfte Positionierungsstift (2121c) in das fünfte Positionierungsloch (2131a) eingeführt ist.

5. Robotertaillenskelett (20) nach Anspruch 3, wobei
der hintere mittlere Teil (2122) des äußeren Taillenskeletts mit einem sechsten Positionierungsstift (2122c) versehen ist und der hintere obere Teil (2132) des äußeren Taillenskeletts mit einem sechsten Positionierungsloch (2132a) versehen ist, wobei der sechste Positionierungsstift (2122c) in das sechste Positionierungsloch (2132a) eingeführt ist.

6. Robotertaillenskelett (20) nach Anspruch 1, wobei Oberflächen des unteren Teils (211) des äußeren Taillenskeletts, des mittleren Teils (212) des äußeren Taillenskeletts und des oberen Teils (213) des äußeren Taillenskeletts, die sich distal von dem inneren Taillenskelett (22) befinden, jeweils mit einer Hautpositionierungsnut (214) versehen sind.

7. Robotertaillenskelett (20) nach einem der Ansprüche 1 bis 6, wobei das äußere Taillenskelett (21) aus einem Leichtbaumaterial hergestellt ist.

8. Roboter, umfassend das Robotertaillenskelett (20) nach einem der Ansprüche 1 bis 7.

## Revendications

1. Squelette de taille de robot (20), comprenant :
un squelette intérieur de taille (22) ; et
un squelette extérieur de taille (21), dans lequel
le squelette extérieur de taille (21) comprend une partie inférieure de squelette extérieur de taille (211), une partie médiane de squelette extérieur de taille (212), et une partie supérieure de squelette extérieur de taille (213) ; la partie inférieure de squelette extérieur de taille (211),
la partie médiane de squelette extérieur de taille (212), et la partie supérieure de squelette extérieur de taille (213) étant connectées en séquence, et entourant toutes le squelette intérieur de taille (22) ;
**caractérisé en ce que**
la partie inférieure de squelette extérieur de taille (211) comprend une partie inférieure gauche de squelette extérieur de taille (2111) et une partie inférieure droite de squelette extérieur de taille (2112) ;
dans lequel
la partie inférieure gauche de squelette extérieur de taille (2111) et la partie inférieure droite de squelette extérieur de taille (2112) sont respectivement fixées sur deux côtés à une partie inférieure du squelette intérieur de taille (22) ;
la partie médiane de squelette extérieur de taille (212) comprend une partie avant médiane de squelette extérieur de taille (2121) et une partie arrière médiane de squelette extérieur de taille (2122) ;
dans lequel
la partie avant médiane de squelette extérieur de taille (2121) est connectée respectivement à la partie inférieure gauche de squelette extérieur de taille (2111) et à la partie inférieure droite de squelette extérieur de taille (2112), la partie arrière médiane de squelette extérieur de taille (2122) est connectée respectivement à la partie inférieure gauche de squelette extérieur de taille (2111) et à la partie inférieure droite de squelette extérieur de taille (2112), la partie avant médiane de squelette extérieur de taille (2121) est connectée à la partie arrière médiane de squelette extérieur de taille (2122), et la partie avant médiane de squelette extérieur de taille (2121) et la partie arrière médiane de squelette extérieur de taille (2122) entourent une partie médiane du squelette intérieur de taille (22) ;
la partie inférieure gauche de squelette extérieur de taille (2111) est pourvue d'une première goupille de positionnement (2111a), et la partie inférieure droite de squelette extérieur de taille (2112) est pourvue d'une deuxième goupille de positionnement (2112a) ; et
la partie avant médiane de squelette extérieur de taille (2121) est pourvue d'un premier trou de positionnement (2121a) et d'un deuxième trou de positionnement (2121b), la première goupille de positionnement (2111a) étant insérée dans le premier trou de positionnement (2121a), et la deuxième goupille de positionnement (2112a) étant insérée dans le deuxième trou de positionnement (2121b).

2. Squelette de taille de robot (20) selon la revendication 1, dans lequel
la partie inférieure gauche de squelette extérieur de taille (2111) est pourvue d'une troisième goupille de positionnement (2111b), et la partie inférieure droite de squelette extérieur de taille (2112) est pourvue d'une quatrième goupille de positionnement (2112b) ; et
la partie arrière médiane de squelette extérieur de taille (2122) est pourvue d'un troisième trou de positionnement (2122a) et d'un quatrième trou de positionnement (2122b), la troisième goupille de positionnement (2111b) étant insérée dans le troisième trou de positionnement (2122a), et la quatrième goupille de positionnement (2112b) étant insérée dans le quatrième trou de positionnement (2122b).

3. Squelette de taille de robot (20) selon la revendication 1, dans lequel
la partie supérieure de squelette extérieur de taille (213) comprend une partie avant supérieure de squelette extérieur de taille (2131) et une partie arrière supérieure de squelette extérieur de taille (2132) ; et
la partie avant supérieure de squelette extérieur de taille (2131) est connectée à la partie avant médiane de squelette extérieur de taille (2121), la partie arrière supérieure de squelette extérieur de taille (2132) est connectée à la partie arrière médiane de squelette extérieur de taille (2122), la partie avant supérieure de squelette extérieur de taille (2131) est connectée à la partie arrière supérieure de squelette extérieur de taille (2132), et la partie avant supérieure de squelette extérieur de taille (2131) et la partie arrière supérieure de squelette extérieur de taille (2132) entourent une partie supérieure du squelette intérieur de taille (22).

4. Squelette de taille de robot (20) selon la revendication 3, dans lequel
la partie avant médiane de squelette extérieur de taille (2121) est pourvue d'une cinquième goupille de positionnement (2121c), et la partie avant supérieure de squelette extérieur de taille (2131) est pourvue d'un cinquième trou de positionnement (2131a), la cinquième goupille de positionnement (2121c) étant insérée dans le cinquième trou de positionnement (2131a).

5. Squelette de taille de robot (20) selon la revendication 3, dans lequel
la partie arrière médiane de squelette extérieur de taille (2122) est pourvue d'une sixième goupille de positionnement (2122c), et la partie arrière supérieure de squelette extérieur de taille (2132) est pourvue d'un sixième trou de positionnement (2132a), la sixième goupille de positionnement (2122c) étant insérée dans le sixième trou de positionnement (2132a).

6. Squelette de taille de robot (20) selon la revendication 1, dans lequel des surfaces de la partie inférieure de squelette extérieur de taille (211), de la partie médiane de squelette extérieur de taille (212) et de la partie supérieure de squelette extérieur de taille (213) qui sont distales du squelette intérieur de taille (22) sont chacune pourvues d'une rainure de positionnement de peau (214).

7. Squelette de taille de robot (20) selon l'une quelconque des revendications 1 à 6, dans lequel le squelette extérieur de taille (21) est fabriqué en un matériau léger.

8. Robot, comprenant le squelette de taille de robot (20) tel que défini dans l'une quelconque des revendications 1 à 7.
